# EUROPÄISCHE PATENTSCHRIFT

(11) **EP 2 346 647 B1**
(45) Veröffentlichungstag und Bekanntmachung des Hinweises auf die Patenterteilung: **10.06.2015**
(21) Anmeldenummer: 09740898.3
(22) Anmeldetag: 28.10.2009
(51) Int. Cl.: B25B 29/02

(54) **WERKZEUG ZUR ÜBERPRÜFUNG EINES BOLZENS UND PRÜFVERFAHREN**
TOOL FOR EXAMINING A BOLT AND TESTING METHOD
OUTIL DESTINÉ À CONTRÔLER UN BOULON ET PROCÉDÉ DE CONTRÔLE

(30) Priorität: 31.10.2008 EP 08168118
(43) Veröffentlichungstag der Anmeldung: 27.07.2011
(73) Patentinhaber: Inventio AG, 6052 Hergiswil (CH)
(72) Erfinder: STECK, Philipp, CH-6044 Udligenswil (CH)
(74) Vertreter: Hirschberger, Petra
(86) Internationale Anmeldenummer: PCT/EP2009/064237
(87) Internationale Veröffentlichungsnummer: WO 2010/049461

(56) Entgegenhaltungen:
- EP-A- 0 186 358
- DE-A1- 2 451 163
- GB-A- 803 218
- US-A- 2 776 108
- US-A- 4 780 942

## Beschreibung

Die vorliegende Erfindung betrifft ein Werkzeug zur Überprüfung eines Bolzens, insbesondere zur Überprüfung der Lagefixierung und/oder der Kraftübertragungskapazität eines Bolzens, wobei der Bolzen in einer umgebenden Struktur fixiert ist, sowie ein Prüfverfahren zur Überprüfung der Lagefixierung und/oder der Kraftübertragungskapazität eines Bolzens.

An sich bekannt sind sogenannte Drehmomentschlüssel, die vorgesehen sind zum Aufbringen eines einstellbaren Drehmoments auf eine Schraube, eine Mutter oder einen Bolzen. Damit ist zum einen ein Anzugsmoment zwischen einem Gewinde und einer Mutter einstellbar und zum anderen ein mittels eines Gewindebolzens übertragbares Drehmoment bestimmbar. Insbesondere kann ein Durchdrehen eines Bolzens innerhalb einer Befestigung geprüft werden, wobei seitens des Drehmomentschlüssels ein Soll-Drehmoment vorgebbar ist, das der Bolzen ohne Losdrehen übertragen können muss. Aus der GB 803 218 ist beispielsweise ein Werkzeug zur Überprüfung eines Bolzens, der in einer umgebenden Struktur fixiert ist, bekannt, wobei das Werkzeug ein Kopplungselement hat, das lösbar und kraftübertragend mit dem Bolzen verbindbar ist. Das Werkzeug hat ausserdem einen Angriffsabschnitt, der lösbar und kraftübertragend mit dem Kopplungselement verbindbar ist, einen Kipphebel, der mit dem Angriffsabschnitt verbunden und schwenkbar an der umgebenden Struktur abstützbar ist, und einen Betätigungselement. Über das Betätigungselement ist eine Kraft und/oder ein Drehmoment in den Kipphebel derart einleitbar ist, dass der Angriffsabschnitt verschoben werden kann.

Aufgabe der Erfindung ist es demgegenüber, einen Bolzen hinsichtlich einer übertragbaren Zug- oder Druckkraft und/oder hinsichtlich seiner axialen Fixierung in einer umgebenden Struktur mit besonders einfachen Mitteln zu überprüfen.

Diese Aufgabe wird mit einem Werkzeug gemäß Anspruch 1 gelöst.

Dabei ist das Werkzeug insbesondere als manuell bedienbares, von einer Person transportierbares Mittel ausgeführt, welches ein über das Betätigungselement erzeugtes Drehmoment in eine Verschiebebewegung des Angriffsabschnitts umwandelt. Mit Hilfe des vorgeschlagenen Werkzeugs kann eine Zug- oder Druckkraft in einen Bolzen eingeleitet werden, wobei als Bolzen eine (Blind-)Niete, ein Stift, eine Schraube, eine Mutter, ein Dübel, ein Passstift, ein Spannbolzen, ein Spreizstift oder dergleichen bzw. eine Mischform der genannten Bauelemente vorgesehen sein kann. Weiter ist als ein Bolzen ein Befestigungselement zur Fixierung einer Führungsschiene in einem Aufzugsschacht vorgesehen, wobei das Befestigungselement insbesondere in einer Stein-, Ziegel- oder Betonstruktur eines Gebäudes positioniert ist und eine Klaue bzw. Klammer trägt, die ihrerseits wiederum einen Abschnitt der Führungsschiene umgreift und festhält.

Das in den Kipphebel einleitbare Drehmoment ist derart gewählt, dass sich am Bolzen und am Angriffsabschnitt eine vorbestimmte maximale Zug- oder Druckkraft ergibt, die einer vom Bolzen mindestens zu übertragenden Haltekraft entspricht. Somit kann der Bolzen auf seine Funktion überprüft werden, die insbesondere darin bestehen kann, eine Mindesthaltekraft in die umgebende Struktur einzuleiten.

Die Verschiebebewegung des Angriffsabschnitts kann dabei sowohl translatorische als auch optional rotatorische Bewegungsanteile enthalten. In besonders bevorzugter Weise wird dem Angriffsabschnitt bei einer Betätigung des Werkzeugs eine Kreisbahn zugeordnet, deren Tangente im Bereich des Angriffsabschnitt in etwa parallel zu einer Längsachse des Bolzens ausgerichtet ist und optional fluchtend mit einer Längsachse des Bolzens zu liegen kommt. Dadurch lässt sich eine im wesentlichen momentenfreie Zug- oder Druckkraft in den Bolzen einleiten. Über den Kipphebel sind dabei ein Drehpunkt bzw. eine Drehachse für das gesamte Werkzeug festlegbar, die beispielsweise als Kipp- oder Schwenkachse des Kipphebels gewählt sind.

In einer Ausgestaltung ist der Angriffsabschnitt insbesondere einstückig ausgeführt mit dem Kipphebel, wobei dem Angriffsabschnitt das separate Kopplungselement zugeordnet ist, über das der Kipphebel mit dem Bolzen verbindbar ist. Das Kopplungselement weist einen mit dem Angriffsabschnitt kooperierenden Kopplungsabschnitt auf. In einer ersten Variante ist das Kopplungselement als separates Bauteil ausgeführt, welches kraft- und/oder formschlüssig auch mit dem Angriffsabschnitt verbindbar ist. In einer weiteren Variante ist das Kopplungselement beweglich (und ggf. unlösbar) mit dem Angriffselement verbunden bzw. an diesem angelenkt.

In einer weiteren Ausgestaltung umgreift der Angriffsabschnitt mit einem oder zwei Greifelementen das Kopplungselement, wobei der Angriffsabschnitt bevorzugt in der Art einer Gabel oder in der Art eines Rings ausgeführt ist. Hierzu ist wenigstens eine Betätigungsposition des Werkzeugs vorgesehen, in der ein Greifelement das Kopplungselement wenigstens abschnittsweise umgreift. Das Greifelement bewirkt so eine hinreichend genaue Ausrichtung, insbesondere Zentrierung des Werkzeugs gegenüber dem Bolzen.

Das Kopplungselement umfasst einen Gewindeabschnitt, insbesondere ein Innengewinde, der mit einem Gewindeabschnitt seitens des Bolzens verschraubbar ist, sowie einen Gelenkabschnitt, der mit dem Angriffsabschnitt zusammenwirkt. Das Kopplungselement ermöglicht somit eine Kraftübertragung vom Angriffsabschnitt des Werkzeugs auf den Bolzen. Insbesondere lassen sich damit sowohl Zug- als auch Druckkräfte zuverlässig in den Bolzen einleiten, wobei der Angriffsabschnitt insbesondere eine kombinierte Translations-/Rotationsbewegung vollführt.

In einer Ausgestaltung weist das Kopplungselement wenigstens eine Kippachse auf, an der der Angriffsabschnitt angreift und über die eine Zug- oder Druckkraft in das Kopplungselement und weiter in den Bolzen einleitbar ist. Die Kippachse erweist sich besonders dann als vorteilhaft, wenn der Angriffsabschnitt während einer bestimmungsgemässen Betätigung des Werkzeugs eine nennenswerte Rotationsbewegung ausführt. Die Kippachse ermöglicht eine Entkopplung von Rotations- und Translationsbewegungsanteilen seitens des Angriffsabschnitts, wobei bevorzugt die Translationsbewegungsanteile an den Bolzen weitergegeben werden.

In einer Ausgestaltung weist der Kipphebel einen Stützbereich auf, über den der Kipphebel an der den Bolzen umgebenden Struktur abstützbar ist. Dabei kann dem Kipphebel im Bereich seines Stützbereichs eine (insbesondere an dem Kipphebel rotierbar gelagerte) Rolle zugeordnet sein, deren Drehachse zugleich als Schwenkachse des Kipphebels dient und über die der Kipphebel an der den Bolzen umgebenden Struktur abstützbar ist. Weiter beispielsweise kann dem Kipphebel im Bereich seines Stützbereichs eine (insbesondere einstückig mit dem Kipphebel ausgeführte) zylinderabschnittsförmige Abroll- und Auflagefläche zugeordnet sein, über die der Kipphebel an der den Bolzen umgebenden Struktur stützend abgerollt werden kann.

In einer Ausgestaltung ist das Betätigungselement als manuell betätigbarer Hebel ausgeführt und insbesondere über eine Kraft- und/oder Momentenbegrenzeranordnung schwenkbar an dem Kipphebel befestigt. In einer ersten Variante ist die Kraft- und/oder Momentenbegrenzeranordnung derart ausgeführt, dass sie lösbar kraftschlüssig an dem Kipphebel angesetzt werden kann. Dazu ist an dem Kipphebel insbesondere eine unrunde Ausnehmung vorgesehen, in die ein entsprechend unrundes Gegenstück seitens des Betätigungselements eingreift. Umgekehrt kann seitens der Kraft- und/oder Momentenbegrenzeranordnung eine unrunde Aufnahme für ein vom Kipphebel abragendes unrundes Gegenstück vorgesehen sein, wobei Aufnahme und Gegenstück bevorzugt formschlüssig ineinandergreifen.

In einer zweiten Variante ist das Betätigungselement wenigstens abschnittsweise elastisch federnd ausgeführt und/oder auf eine vorbestimmte maximal zulässige Biegebelastung ausgelegt, oberhalb derer das Betätigungselement bleibend plastisch deformiert wird. In dieser Variante ergibt sich eine Begrenzung des auf den Kipphebel einleitbaren Moments durch eine bestimmte Dimensionierung des Betätigungselementes. Die genannte Dimensionierung kann insbesondere durch eine entsprechende Wahl des Werkstoffs und der (minimalen) Querschnittsabmessungen des Betätigungselements erfolgen. In einer weiteren Variante ist das Betätigungselement einstückig mit dem Kipphebel ausgeführt oder unlösbar, insbesondere stoffschlüssig mit diesem verbunden. Bei dieser Variante wird eine Begrenzung des erzeugbaren Drehmoments insbesondere durch eine entsprechende Wahl der Hebelverhältnisse vorgenommen. Die Hebelverhältnisse werden ausgehend von einer (durchschnittlich) möglichen Kraftausübung einer männlichen Person derart gewählt, dass ein bestimmtes maximales Drehmoment seitens des Kipphebels bei bestimmungsgemässer Handhabung nicht überschritten und ein bestimmtes minimales Drehmoment sicher erreicht werden kann. In einer weiteren Variante ist ein kraft- und/oder momentenbegrenzendes Kupplungselement (z.B. eine Rutschkupplung o.ä.) zwischen Kipphebel und Betätigungselement geschaltet. Es versteht sich, dass die genannten und äquivalente Varianten miteinander kombinierbar sind; insbesondere ist eine Ausführung gemäss der ersten Variante(n) mit Merkmalen der zweiten und/oder dritten Variante(n) ergänzt und optimiert werden.

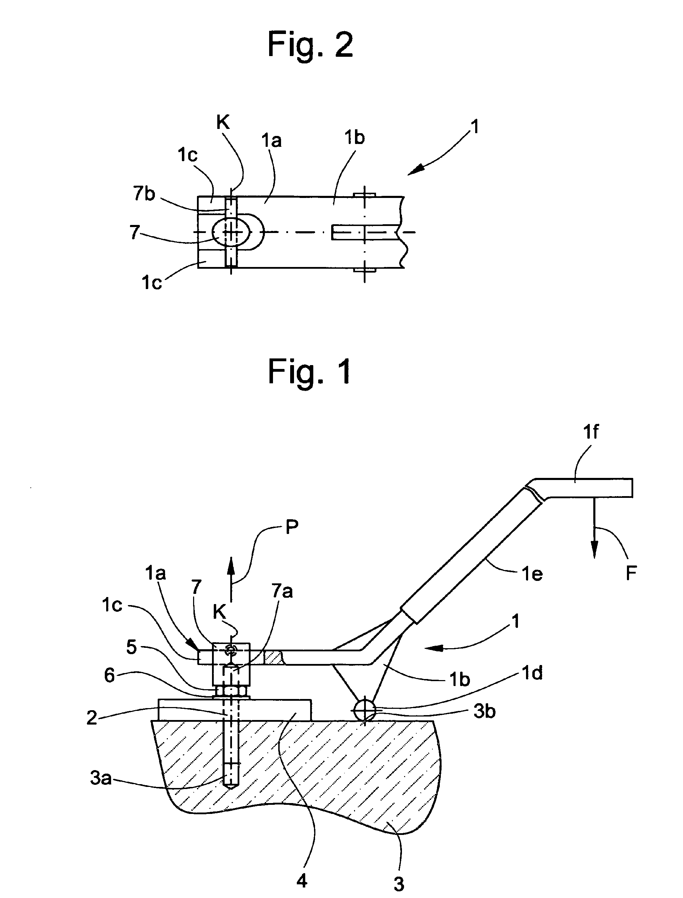

In einer Ausgestaltung sind das Betätigungselement sowie die Kraft- und/oder Momentenbegrenzeranordnung als Einheit, insbesondere in der Form eines Drehmomentschlüssels ausgeführt, die lösbar oder unlösbar mit dem Kipphebel verbunden ist. Dazu ist an dem Kipphebel insbesondere eine unrunde Ausnehmung vorgesehen, in die ein entsprechend unrundes Gegenstück seitens der Einheit bzw. des Drehmomentschlüssels eingreift. Umgekehrt kann seitens der Einheit bzw. des Drehmomentschlüssels eine unrunde Aufnahme für ein vom Kipphebel abragendes unrundes Gegenstück vorgesehen sein, wobei Aufnahme und Gegenstück bevorzugt formschlüssig ineinandergreifen. Aus der EP 1306170 A2 sind gemäss den Fig. 9 und 10 samt zugehöriger Beschreibung ein erstes Ausführungsbeispiel und gemäss den Fig. 1 ff samt zugehöriger Beschreibung ein weiteres Ausführungsbeispiel für einen zu verwendenden Drehmomentschlüssel bekannt. Des weiteren sind aus der EP2003291555A weitere Ausführungsbeispiele für Drehmomentschlüssel bekannt (siehe dort Fig. 1 ff samt zugehöriger Beschreibung), die ebenfalls mit dem Kipphebel in Eingriff bringbar oder mit dem Kipphebel verbunden ausführbar sind. Die genannten Dokumente werden hinsichtlich des Aufbaus möglicher einsetzbarer Drehmomentschlüssel vollumfänglich in Bezug genommen.

Ein Verfahren zur Überprüfung der Lagefixierung und/oder der Kraftübertragungskapazität eines Bolzens in einer den Bolzen umgebenden Struktur umfasst einen Verfahrensschritt, bei dem ein Kopplungselement mit dem Bolzen verschraubt wird, bei dem ein Werkzeug mit einem Kipphebel an die den Bolzen umgebende Struktur verschwenkbar angesetzt wird, einen Verfahrensschritt, bei dem über ein Betätigungselement das Werkzeug mit einem Drehmoment beaufschlagt und um eine relativ zur Struktur im wesentlichen feststehende Schwenkachse gedreht wird und einen Verfahrensschritt, bei dem mittels eines Angriffsabschnitts seitens des Werkzeugs eine Zug- oder Druckkraft in das Kopplungselement und mithin in den Bolzen eingeleitet, wobei Angriffsabschnitt und Kopplungselement gegeneinander verschwenkt werden. Damit kann auf einfache Weise eine Lagefixierung des Bolzens innerhalb der umgebenden Struktur, d.h. der feste Sitz des Bolzens, geprüft werden. Insbesondere kann geprüft werden, ob der Bolzen ausreichend hohe Zug- und/oder Druckkräfte auf die umgebende Struktur übertragen kann. In bevorzugter Weise ist als Bolzen ein Befestigungselement für eine Führungsschiene oder eine sonstige Trägeranordnung in einem Aufzugssystem gewählt, wobei der Bolzen insbesondere über einen vom Bolzen durchdrungenen Bügel, eine Klammer oder dergleichen auch indirekt mit der Führungsschiene oder der Trägeranordnung verbunden sein kann. Im letzteren Fall kann das Werkzeug auch indirekt über den Bügel an die umgebende Struktur angesetzt werden.

Mit Hilfe des Kopplungselements kann seitens des Bolzens ein Gelenkabschnitt oder dergleichen zur Verfügung gestellt werden, der fest mit dem Bolzen verbindbar ist. An dem Gelenkabschnitt des Kopplungselements kann der Angriffsabschnitt schwenkbar angesetzt werden, so dass relevante Kräfte über das Werkzeug in den Bolzen eingeleitet werden können.

Weitere Aufgaben, Merkmale und Vorteile ergeben sich aus den Unteransprüchen und den nachfolgend beschriebenen Ausführungsbeispiele. Hierzu zeigen, teilweise schematisiert:
- Fig. 1: eine schematische Seitenansicht eines Ausführungsbeispiels eines Werkzeuges in einer ersten Arbeitsposition;
- Fig. 2: einen Ausschnitt aus der Draufsicht auf das Werkzeug gemäss Fig. 1,
- Fig. 3: eine perspektivische Darstellung eines Kipphebels eines zweiten Ausführungsbeispiels eines Werkzeuges und
- Fig. 4: eine schematische Seitenansicht eines weiteren Ausführungsbeispiels eines Werkzeuges.

Fig. 1 zeigt ein (erstes) Werkzeug 1 zur Überprüfung der Lagefixierung und/oder der Kraftübertragungskapazität eines Bolzens 2, wobei der Bolzen 2 in einer umgebenden Struktur 3 fixiert sein soll. In einer Anwendung ist der Bolzen 2 bevorzugt als Befestigungsmittel einer Führungsschiene in einem Aufzugssystem ausgeführt (nicht näher dargestellt). In bekannter Weise sind dabei eine Trägeranordnung 4 in Form einer Mehrzahl von Klammern oder Bügeln vorgesehen, die einerseits fest mit einer Führungsschiene und andererseits fest mit einer Struktur 3 in Form einer Schachtwand des Aufzugssystems verbunden sind. In modifizierten Ausführungsbeispielen sind neben bzw. anstelle einer Führungsschiene andere Bauelemente eines Aufzugssystems vorgesehen, die mittels eines oder mehrer Bolzen an einer Aufzugsschachtwand befestigt sind. Im Hinblick auf eine zuverlässige Montage einer Trägeranordnung 4 mit Hilfe der Bolzen 2 weisen letztere zum einen jeweils (in nicht näher dargestellter Weise) ein Gewinde und/oder Spreizklauen oder dergleichen auf, die form- und/oder kraftschlüssig an einer Innenseite einer Bohrung 3a einer Schachtwand 3 angreifen. Zum anderen weisen die Bolzen 2 jeweils ein Gewinde 2a auf, auf das eine Mutter 5 mit Unterlegscheibe 6 aufschraubbar ist. In modifizierten Ausführungsbeispielen sind die Bolzen als (Blind-)Niete, als Dehnschrauben, als Dübel, Spannbolzen oder Spreizstifte ausgebildet.

Das Werkzeug 1 weist in einem Ausführungsbeispiel einen Angriffsabschnitt 1a auf, der lösbar und kraftübertragend mit einem Kopplungselement 7 verbindbar ist. Der Angriffsabschnitt 1a ist insbesondere einstückig ausgeführt mit einem Kipphebel 1b und weist bevorzugt zwei Greifelemente 1c auf, die zusammen eine Art Gabel bilden (vgl. Fig. 2) und Teile des Kopplungelements 7 umgreifen können. In einem alternativen Ausführungsbeispiel ist ein näherungsweise G- oder Ring-förmiges Greifelement vorgesehen. Der Angriffsabschnitt 1a ist dazu vorgesehen, eine lösbare und optional schwenkbare Verbindung zum Kopplungselement 7 herzustellen.

Der Kipphebel 1b weist einen Stützbereich 1d auf, über den der Kipphebel bzw. das Werkzeug 1 an der den Bolzen 2 umgebenden Struktur 3 und/oder an der Trägeranordnung 4 abstützbar ist. Der Stützbereich 1d weist abschnittsweise eine zylindrische Aussenkontur auf, an der der Stützbereich 1d an der umgebenden Struktur 3 (z.B. Schachtwand) abrollbar bzw. schwenkbar abzustützen ist.

An dem Werkzeug ist ferner ein Betätigungselement 1e vorgesehen, über das eine Kraft und/oder ein Drehmoment in den Kipphebel 1b, derart einleitbar ist, dass der Angriffsabschnitt 1a verschoben wird. Insbesondere ist vorgesehen, dass eine Person im Bereich eines Handgriffs 1f manuell eine Betätigungskraft F (vgl. Fig. 1) in das Werkzeug 1 einleiten kann und entsprechend den Hebelverhältnissen des Werkeugs eine Zugkraft P am Bolzen mit Hilfe des Angriffsabschnitts erzeugt werden kann. In bevorzugter Weise ist das Betätigungselement 1e als abgewinkelt ausgestaltetes Kunststoff- oder Metallrohr ausgeführt, das einen Teil des Kipphebels klemmend umgreift. In einem modifizierten Ausführungsbeispiel sind Kipphebel und Betätigungselement einstückig ausgeführt oder stoffschlüssig durch Schweissen, Kleben etc. miteinander verbunden. In weiteren Ausführungsbeispielen umfasst das Betätigungselement eine elastisch deformierbare Federanordnung, die bei einer Überschreitung einer vorbestimmten maximalen Betätigungskraft Fₘₐₓ (z. B. Fₘₐₓ₁ = 400 N oder Fₘₐₓ₂ = 600 N) nachgibt und/oder einen Hebelarm des Betätigungselements bzw. des Kipphebels verkürzt. Damit wird eine entsprechend den Hebellängen des Werkzeugs in den Bolzen einleitbare Zugkraft begrenzt.

Das Werkzeug umfasst das Kopplungselement 7, das bevorzugt in Form einer Glocke mit einem unterseitigen Sackloch 7a samt Innengewinde ausgeführt ist. An seiner Oberseite weist das Kopplungselement 7 bevorzugt eine insbesondere hohle Querachse 7b auf, die bevorzugt zu beiden Seiten des Kopplungselements 7 abragt (vgl. Fig. 2). In nicht dargestellter Weise kann ausserdem ein nach oben abragender Ring fest am Kopplungselement angebracht sein. Das im Sackloch 7a angeordnete Innengewinde bildet einen Gewindeabschnitt, der mit einem korrespondierenden Gewindeabschnitt seitens des Bolzens 2 verschraubbar ist. Somit sind Bolzen und Kopplungselement rasch und einfach lösbar miteinander zu verbinden. Die Querachse 7b hingegen bildet einen Gelenkabschnitt mit einer Kippachse K, der mit dem Angriffsabschnitt 1a gelenkig zusammenwirken kann. Insbesondere kann das Kopplungselement 7 unterhalb der Querachse 7b vom Angriffsabschnitt 1a umgriffen werden. Das Kopplungselement 7 mit seinem vorzugsweise durchgehenden Innengewinde kann durch Drehen auf ein gewünschtes horizontales Niveau eingestellt werden. Dadurch ist eine flexible Positionierung des Kopplungselements 7 auf dem Bolzen 2 möglich.

Wie bereits angesprochen, ist zur Benutzung des Werkzeugs 1 bevorzugt vorgesehen, dass eine Person im Bereich eines Handgriffs 1f manuell eine Betätigungskraft F in etwa parallel zur Achse des Bolzens 2 (vgl. Fig. 1) in das Werkzeug 1 einleitet. Das Werkzeug 1, welches im Bereich des Stützbereichs 1d um eine geometrische Achse 3b abrollend bzw. schwenkbar und insbesondere nicht gleitend abgestützt ist, vollzieht eine gewisse Rotationsbewegung um den Stützbereich 1d und hebt den Angriffsabschnitt 1a in Richtung des Pfeils P an, sofern die Struktur 3 im wesentlichen unelastisch ausgeführt ist. Entsprechend den Hebelverhältnissen des Werkzeugs wird mit Hilfe des Angriffsabschnitts eine Kraft P in das Kopplungselement 7 eingeleitet, wobei eine Einleitung eines Moments in das Kopplungselement dadurch weitgehend vermieden wird, dass Angriffsabschnitt 1a und Kopplungselement 7 um die Kippachse K gegeneinander verschwenkbar angeordnet sind.

Im vorliegenden Ausfiihrungsbeispiel wird eine Zugkraft P über das Kopplungselement 7 in den Bolzen eingeleitet. Mit Hilfe dieser Zugkraft, die idealerweise an eine vorbestimmte Soll-Haltekraft (z.B. Pₘᵢₙ₁ = 800 N oder Pₘᵢₙ₂ = 1000 N) des Bolzens angenähert ist, kann der Bolzen auf seine Fixierung hin überprüft werden. Insbesondere können lockere oder nur unzureichend festgeklemmte Bolzen erkannt und aus ihrer Position gezogen werden. In einem modifizierten Ausführungsbeispiel ist nach demselben Prinzip eine Druckkraft in einen Bolzen einleitbar.

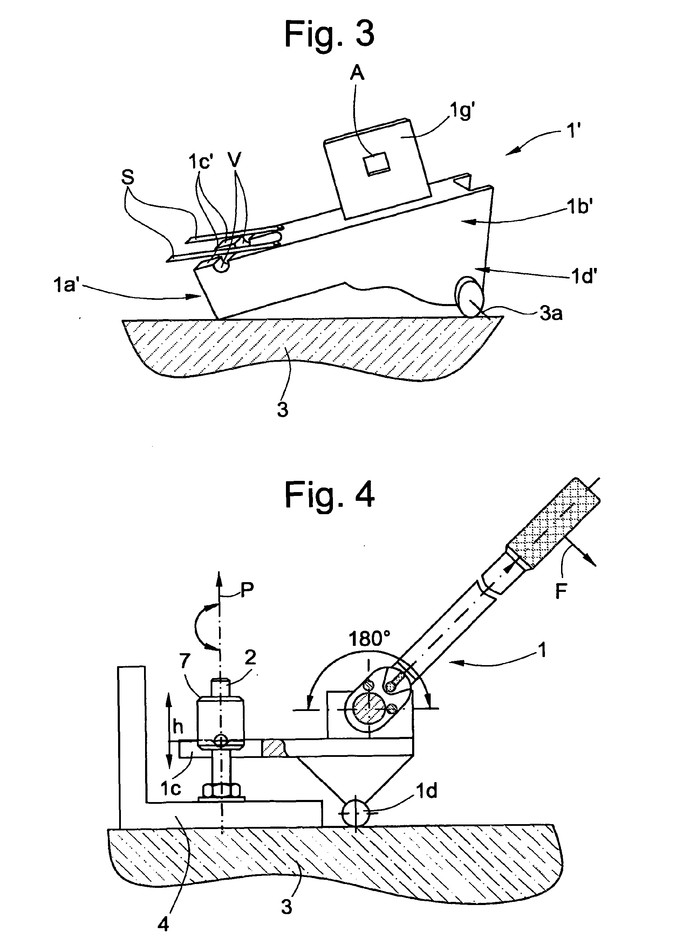

Ein Werkzeug 1' umfasst in einem zweiten Ausführungsbeispiel einen Kipphebel 1b' gemäss Fig. 3. Das Werkzeug 1 weist ferner einen Angriffsabschnitt 1a auf, der wiederum lösbar und kraftübertragend mit dem Kopplungselement (nicht dargestellt) verbindbar ist. Der Angriffsabschnitt 1a ist insbesondere einstückig ausgeführt mit einem Kipphebel 1b' oder mit diesem kraftübertragend verbunden.

Der Angriffsabschnitt 1a' weist bevorzugt zwei Greifelemente 1c' auf, die zusammen eine Art Gabel bilden und ein damit verbundenes Kraftübertragungselement umgreifen können. Insbesondere sind an den Greifelementen 1c' Vertiefungen V vorgesehen, in denen eine Achse des Kopplungselements zu liegen kommen kann. Vorteilhafterweise sind zwei Sicherungsstreifen S - die Vertiefungen V übergreifend - an den Greifelementen 1c' festgelegt. Die Sicherungsstreifen S sind vorteilhaft aus einem elastischen Stahlblech hergestellt und ermöglichen eine lose Fixierung zwischen Kopplungselement und Greif-element, indem sie eine Achse des Kopplungselements in den Vertiefungen halten. Weitere Merkmale können hierzu aus dem ersten Ausführungsbeispiel übernommen werden.

Der Kipphebel 1b' weist einen Stützbereich 1d' auf, über den der Kipphebel bzw. das Werkzeug 1' an der den Bolzen umgebenden Struktur 3 und/oder an einer Trägeranordnung abstützbar ist. Der Stützbereich 1d' weist abschnittsweise eine wenigstens abschnittsweise zylindrische Aussenkontur auf, an der der Stützbereich 1 d' an der umgebenden Struktur 3 (z.B. Schachtwand) abrollbar bzw. schwenkbar abzustützen ist. Kipphebel 1b', Angriffabschnitt 1a' und Stützbereich 1d' sind vorzugsweise einstückig aus einem metallischen Werkstoff hergestellt. Optional kann der Stützbereich mit einer Oberflächenbeschichtung aus einem Kunststoff versehen sein.

An dem Werkzeug ist ferner ein in Fig. 3 nicht näher dargestelltes Betätigungselement vorgesehen. Das Betätigungselement ist, wie im Ausführungsbeispiel gemäss Fig. 4 gezeigt, bevorzugt als handelsüblicher Drehmomentschlüssel bzw. Steckschlüssel ausgeführt. Hierzu weist das Werkzeug 1' ein Anschluss-Element 1g' auf mit einer in etwa quadratischen Ausnehmung A. Die Ausnehmung ist beispielsweise an eine ½"-Steckschlüssel-Nuss mit Schlüsselweite-19 angepasst und weist einen Innendurchmesser von ca. 23 mm auf. Selbstverständlich können auch völlig andere Geometrien, insbesondere dreieckige, fünfeckige oder sechseckige Geometrien für die Ausnehmung vorgesehen sein, sofern an dem Drehmomentschlüssel ein entsprechendes Gegenstück vorgesehen ist. Der Drehmomentschlüssel ist um ca. 180° schwenkbar, wie in Fig. 4 angedeutet. An dem Drehmomentschlüssel ist bevorzugt ein Momentenbegrenzer vorgesehen, der ein in den Kipphebel einzuleitendes Moment auf einen vorbestimmten Wert begrenzt (z. B. 100 Nm). Ein Klickgeräusch entsteht, wenn das eingestellte Moment (bzw. Zugkraft P) erreicht ist.

In einem modifizierten Ausführungsbeispiel ist anstelle eines Momentenbegrenzers eine Kraftbegrenzeranordnung vorgesehen. Die Kraftbegrenzeranordnung kann wiederum durch eine elastisch federnde Ausgestaltung des Betätigungselements realisiert werden.

In einem weiteren modifizierten Ausführungsbeispiel ist das Werkzeug dadurch gekennzeichnet, dass das Betätigungselement als manuell betätigbarer Hebel ausgeführt und insbesondere über eine Kraft- und/oder Momentenbegrenzeranordnung schwenkbar an dem Kipphebel befestigt ist. Dabei sind bevorzugt das Betätigungselement sowie die Kraft- und/oder Momentenbegrenzeranordnung als Einheit, insbesondere in der Form eines Drehmomentschlüssels ausgeführt, die lösbar oder unlösbar mit dem Kipphebel verbunden ist.

Mit Hilfe der beschriebenen Werkzeuge 1, 1' ist ein Verfahren zur Überprüfung der Lagefixierung und/oder der Kraftübertragungskapazität eines Bolzens 2 in einer den Bolzen umgebenden Struktur 3 durchführbar. Bei einem derartigen Verfahren wird in einem Verfahrensschritt das Kopplungselement 7 lösbar mit dem Bolzen 2 verschraubt, und in einem nachfolgenden Verfahrensschritt wird das Werkzeug 1, 1' mit einem Kipphebel 1b, 1b' an die den Bolzen 2 umgebende Struktur 3 verschwenkbar angesetzt. Als umgebende Struktur kann eine (vertikale oder horizontale) Schachtwand eines Personen- oder Lastenaufzuges vorgesehen sein. Als umgebende Struktur kann auch eine sonstige Wand aus einem nichtmetallischen Naturstoff, einem Holz, einem Stein oder einem geschäumten Material vorgesehen sein. In einem weiteren, insbesondere nachfolgenden Verfahrensschritt wird über ein Betätigungselement 1e, 1f das Werkzeug mit einem Drehmoment (bzw. einer Kraft) beaufschlagt derart, dass das Werkzeug um eine relativ zur Struktur 3 im wesentlichen feststehende Schwenkachse 3b gedreht wird. In einem weiteren Verfahrensschritt wird mittels eines Angriffsabschnitts 1a, 1a' seitens des Werkzeugs eine Zug- oder Druckkraft in das Kopplungselement 7 und mithin in den Bolzen 2 eingeleitet, wobei Angriffsabschnitt 1a, 1a' und Kopplungselement 7 gegeneinander um die Achse K verschwenkt werden.

## Patentansprüche

1. Werkzeug zur Überprüfung eines Bolzens (2), der in einer umgebenden Struktur (3) fixiert ist, mit
- einem Kopplungselement (7), das lösbar und kraftübertragend mit dem Bolzen (2) verbindbar ist, wobei das Kopplungselement (7)
a) einen Gewindeabschnitt hat, der mit einem Gewindeabschnitt seitens des Bolzens (2) verschraubbar ist, und
b) einen Gelenkabschnitt hat,
- einem Angriffsabschnitt (1a, 1a'), der lösbar und kraftübertragend mit dem Kopplungselement (7) verbindbar ist, wobei der Gelenkabschnitt mit dem Angriffsabschnitt (1a, 1a') zusammenwirkt,
- einem Kipphebel (1b, 1b'), der mit dem Angriffsabschnitt (1a, 1a') verbunden und schwenkbar an der umgebenden Struktur (3) abstützbar ist, und
- einem Betätigungselement (1e), über das eine Kraft und/oder ein Drehmoment in den Kipphebel (1b, 1b'), derart einleitbar ist, dass der Angriffsabschnitt (1a, 1a') verschoben werden kann.

2. Werkzeug nach Anspruch 1, wobei
der Angriffsabschnitt (1a, 1a') einen oder zwei Greifelemente (1c) hat, um das Kopplungselement (7) zu greifen, wobei der Angriffsabschnitt in einer Art einer Gabel oder eines Rings ausgeführt ist.

3. Werkzeug nach einem der vorhergehenden Ansprüche, wobei
das Kopplungselement (7) wenigstens eine Kippachse (K) aufweist, an der der Angriffsabschnitt (1a, 1a') angreift und über die eine Zug- oder Druckkraft (P) in das Kopplungselement (7) und weiter in den
Bolzen (2) einleitbar ist.

4. Werkzeug nach einem der vorhergehenden Ansprüche, wobei
der Kipphebel (1b, 1b) einen Stützbereich (1d, 1d') aufweist, über den der Kipphebel (1b, 1b') an der den Bolzen (2) umgebenden Struktur (3) abstützbar ist.

5. Werkzeug nach einem der vorhergehenden Ansprüche, wobei
das Betätigungselement (1e) als manuell betätigbarer Hebel ausgeführt und über eine Kraft- und/oder Momentenbegrenzeranordnung schwenkbar an dem Kipphebel (1b, 1b') befestigt ist.

6. Werkzeug nach Anspruch 5, wobei
das Betätigungselement (1e) sowie die Kraft- und/oder Momentenbegrenteranordnung Teil eines Drehmomentschlüssels sind, der lösbar oder unlösbar mit dem Kipphebel (1b') verbunden ist.

7. Verfahren zur Überprüfung der Lagefixierung und/oder der Kraftübertragungskapazität eines Bolzen (2) in einer den Bolzen umgebenden Struktur (3) mit einem Werkzeug nach einem der Ansprüche 1 - 6, mit folgenden Schritten:
- Verschrauben eines Kopplungselements (7) mit dem Bolzen (2),
- lösbar Verbinden eines Angriffsabschnitts (1a, 1a') des Werkzeugs (1, 1') mit dem Kopplungselement (7), wobei das Werkzeug ausserdem einen Kipphebel (1b, 1b'), der mit dem Angriffsabschnitt (1a, 1a') verbunden ist, und ein Betätigungselement (1e) hat, das mit dem Kipphebel (1b, 1b') gekoppelt ist,
- Ansetzen des Kipphebels (1b, 1b') an die den Bolzen umgebende Struktur (3), und
- Beaufschlagen des Betätigungselements (1e) mit einer Kraft und/oder einem Drehmoment, um das Werkzeug relativ zur Struktur (3) einer im wesentlichen feststehenden Schwenkachse (3b) zu drehen und somit mittels des Angriffsabschnitts (1a, la') eine Zug- oder Druckkraft in das Kopplungselement (7) und mithin in den Bolzen (2) einzuleiten.

8. Verfahren nach Anspruch 7, bei dem das Verschrauben des Kopplungselements (7) mit dem Bolzen (2) ein Drehen des Kopplungselements (7) umfasst, um das Kopplungselement (7) auf ein gewünschtes horizontales Niveau einzustellen.

## Claims

1. Tool for checking a bolt (2) fixed in a surrounding structure (3), comprising
- a coupling element (7) detachably connectible with the bolt (2) in force-transmitting manner, wherein the coupling element (7)
a) has a threaded section which can be screwed to a threaded section at the bolt (2) and
b) has a joint section,
- an engagement section (1a, 1a') which is detachably connectible with the coupling element (7) in force-transmitting manner, wherein the joint section co-operates with the engagement section (1a, 1a'),
- a rocker (1 b, 1 b') connected with the engagement section (1 a, 1 a') and supportable at the surrounding structure (3) to be pivotable and
- an actuating element (1e) by way of which a force and/or a torque is so introducible into the rocker (1 b, 1 b') that the engagement section (1 a, 1 a') can be displaced.

2. Tool according to claim 1, **characterised in that** the engagement section (1a, 1a') has one or two grip elements (1c) in order to grip the coupling element (7), wherein the engagement section is constructed in a form of a fork or ring.

3. Tool according to one of the preceding claims, wherein the coupling element (7) comprises at least one rocking axis (K) at which the engagement section (1 a, 1 a') engages and by way of which a tension or compression force (P) is introducible into the coupling element (7) and further into the bolt (2).

4. Tool according to any one of the preceding claims, wherein the rocker (1 b, 1 b') has a support region (1 d, 1 d') by way of which the rocker (1 b, 1b') can be supported at the structure (3) surrounding the bolt (2).

5. Tool according to any one of the preceding claims, wherein the actuating element (1e) is constructed as a manually actuable lever and is pivotably fastened to the rocker (1 b, 1b') by way of a force and/or torque limiting arrangement.

6. Tool according to claim 5, wherein the actuating element (1e) as well as the force and/or torque limiting arrangement are part of a torque wrench detachably or non-detachably connected with the rocker (1b').

7. Method of checking the positional fixing and/or the force transmission capability of a bolt (2) in a structure (3) surrounding the bolt with a tool according to any one of claims 1 to 6, comprising the following steps:
- screwing a coupling element (7) to the bolt (2),
- detachably connecting an engagement section (1 a, 1a') of the tool (1, 1') with the coupling element (7), wherein the tool additionally comprises a rocker (1 b, 1 b') connected with the engagement section (1a, 1a') and an actuating element (1e) coupled with the rocker (1 b, 1 b'),
- applying the rocker (1 b, 1 b') to the structure (3) surrounding the bolt and
- loading the actuating element (1 e) with a force and/or a torque in order to rotate the tool relative to the structure (3) about a substantially fixed pivot axis (3b) and thus to introduce by means of the engagement section (1a, 1a') a tension or compression force into the coupling element (7) and thus into the bolt (2).

8. Method according to claim 7, in which the screwing of the coupling element (7) to the bolt (2) comprises rotating the coupling element (7) in order to set the coupling element (7) to a desired horizontal level.

## Revendications

1. Outil pour contrôler un boulon (2) qui est fixé dans une structure environnante (3), avec
- un élément d'accouplement (7) qui est apte à être relié au boulon (2) de manière amovible et en transmettant une force, étant précisé que l'élément d'accouplement (7)
a) comporte une partie filetée qui est apte à être vissée à une partie filetée du côté du boulon (2), et
b) une partie articulée,
- une partie d'action (1a, 1a') qui est apte à être reliée à l'élément d'accouplement (7) de manière amovible et en transmettant une force, étant précisé que la partie filetée coopère avec la partie d'action (1a, 1a'),
- un levier de basculement (1b, 1b') qui est relié à la partie d'action (1a, 1a') et qui est apte à s'appuyer de manière pivotante à la structure environnante (3), et
- un élément d'actionnement (1e) par l'intermédiaire duquel une force et/ou un couple de rotation peuvent être introduits dans le levier oscillant (1b, 1b') de telle sorte que la partie d'action (1a, 1a') puisse coulisser.

2. Outil selon la revendication 1, étant précisé que la partie d'action (1a, 1a') comporte un ou deux éléments de prise (1c) pour saisir l'élément d'accouplement (7), étant précisé que la partie d'action est réalisée à la manière d'une fourche ou d'une bague.

3. Outil selon l'une des revendications précédentes, étant précisé que l'élément d'accouplement (7) présente au moins un axe de basculement (K) au niveau duquel la partie d'action (1a, 1a') agit et par l'intermédiaire duquel une force de traction ou de pression (P) peut être introduite dans l'élément d'accouplement (7) et ensuite dans le boulon (2).

4. Outil selon l'une des revendications précédentes, étant précisé que le levier de basculement (1b, 1b') comporte une zone d'appui (1d, 1d') par l'intermédiaire de laquelle il peut s'appuyer à la structure (3) qui entoure le boulon (2).

5. Outil selon l'une des revendications précédentes, étant précisé que l'élément d'actionnement (1e) est conçu comme un levier à commande manuelle et est fixé pivotant au levier de basculement (1b, 1b') par l'intermédiaire d'un dispositif limiteur de force et/ou de couple.

6. Outil selon la revendication 5, étant précisé que l'élément d'actionnement (1e) et le dispositif limiteur de force et/ou de couple font partie d'une clé dynamométrique qui est reliée au levier de basculement (1b') de manière amovible ou non amovible.

7. Procédé pour contrôler la fixation en position et/ou la capacité de transmission de force d'un boulon (2) dans une structure environnante (3) à l'aide d'un outil selon l'une des revendications 1 à 6, avec les étapes suivantes :
- vissage d'un élément d'accouplement (7) au boulon (2),
- liaison amovible entre une partie d'action (1a, 1a') de l'outil (1, 1') et l'élément d'accouplement (7), étant précisé que l'outil comporte en outre un levier de basculement (1b, 1b') qui est relié à la partie d'action (1a, 1a'), et un élément d'actionnement (1e) qui est accouplé au levier de basculement (1b, 1b'),
- application du levier de basculement (1b, 1b') contre la structure (3) qui entoure le boulon, et
- sollicitation de l'élément d'actionnement (1e) avec une force et/ou un couple de rotation, pour tourner l'outil sur un pivot (3b) globalement fixe par rapport à la structure (3) et, ainsi, introduire à l'aide de la partie d'action (1a, 1a') une force de traction ou de pression dans l'élément d'accouplement (7) et, de ce fait, dans le boulon (2).

8. Procédé selon la revendication 7, selon lequel le vissage de l'élément d'accouplement au boulon (2) comprend une rotation de l'élément d'accouplement (7) pour régler ce dernier à un niveau horizontal souhaité.
